# EUROPEAN PATENT APPLICATION

(11) **EP 3 264 393 A1**
(43) Date of publication of application: **03.01.2018**
(21) Application number: 16177153.0
(22) Date of filing: 30.06.2016
(51) Int. Cl.: G08G 5/02, G08G 5/00, G05D 1/06

(54) **GO AROUND CREW SUPPORT SYSTEM AND AIRCRAFT PROVIDED THEREWITH**

(71) Applicant: Stichting Nationaal Lucht- en Ruimtevaart Laboratorium, 1059 CM Amsterdam (NL)
(72) Inventor: VERHOEVEN, Ronald Petrus Maria, 1092 VV AMSTERDAM (NL); HEESBEEN, Wolbertus Willem Maria, 2104 SR HEEMSTEDE (NL); ROUWHORST, Wilhelmus Fredericus Jacobus Antonius, 1067 DC AMSTERDAM (NL); DE GELDER, Nicolaas, 2651 AK BERKEL EN RODENRIJS (NL)
(74) Representative: De Vries & Metman

(57) **Abstract**

A control system is provided for assisting an aircraft flight crew in performing a go-around procedure after such a go-around procedure has been initiated by the aircraft flight crew. The control system comprises first means for, after initiation of the go-around procedure, determining the available thrust and weight of the aircraft, second means for, based upon the determined available thrust and weight of the aircraft, calculating and setting a reduced go-around thrust between a pre-defined standard go-around thrust and a lower climb thrust, third means for, after initiation of the go-around procedure, changing the aircraft configuration such that a drag reduction is obtained, and fourth means for, based upon pre-determined altitudes of the aircraft, changing the thrust and aircraft configuration for finally arriving at a situation in which the aircraft levels off at a set missed approach altitude with a manoeuvre speed corresponding to a clean aircraft configuration.

## Description

In a first aspect the invention relates to a control system for assisting an aircraft flight crew in performing a go-around procedure after such a go-around procedure has been initiated by the aircraft flight crew.

A go-around (or go-around flight operation) is a normally safe, standard aircraft manoeuvre which discontinues an approach to landing. It also is referred to as "missed approach" flight operation. During such a go-around the approach flight phase is interrupted or aborted (by initiation of the go-around procedure) in case the flight crew has assessed that the current approach is unstable, and/or that continuation of the approach flight phase may or will lead to unsafe flight conditions, or that at the so-called Decision Height the required visual reference to continue the approach cannot be established. After initiation of the go-around via the so-called go-around procedure, the flight crew has to perform specific tasks under appropriate conditions involving manual and/or verbal operations which have to be executed by the flight crew following a standardized procedure.

In general it is observed that the flight crew workload to execute a go-around procedure is very high. Moreover, various incidents have led to the belief that the go-around flight operation and its associated procedure is, even today, still rather difficult to execute for the flight crew, especially for aircraft with low landing weight and having excessive available power (so when the ratio thrust over weight is high, for example with two engines still available). In such incidents various so-called go-around altitude bursts are reported in which the aircraft overshoots the set missed approach altitude.

In view of the above it is an object of the invention to provide a control system which may assist the flight crew in performing the go-around procedure and which may be helpful in preventing or minimizing the occurrence of the mentioned altitude bursts.

In accordance with the present invention such a control system is characterized in that the control system comprises first means for, after initiation of the go-around procedure, determining the available thrust and weight of the aircraft, second means for, based upon the determined available thrust and weight of the aircraft, calculating and setting a reduced go-around thrust between a pre-defined standard go-around thrust and a lower climb thrust, third means for, after initiation of the go-around procedure, changing the aircraft configuration such that a drag reduction is obtained, and fourth means for, based upon predetermined altitudes of the aircraft, changing the thrust and aircraft configuration for finally arriving at a situation in which the aircraft levels off at a set missed approach altitude with a manoeuvre speed in a corresponding clean aircraft configuration.

It is noted that the decision to initiate a go-around procedure solely lies with the flight crew and that the control system only provides assistance for the flight crew while performing the go-around procedure. The normal initiation of the go-around procedure involves a manual handling action by a member of the flight crew (specifically the pilot flying the aircraft) to set an aircraft guidance and control logic in a go-around mode. Generally this involves pushing certain TOGA (Take Off / Go Around) switches on the throttle/thrust levers, or manually pushing the throttle/thrust levers into the TOGA mode. While in a state of the art design this will generally automatically engage the TOGA-mode of guidance and control of the aircraft with full TOGA thrust, in accordance with the present invention a control system is activated which will automate specific tasks under the appropriate conditions.

After the first means have determined the available thrust (or power) and (landing) weight (the weight at the moment of initiation of the go-around procedure) of the aircraft, the second means will calculate and set the reduced go-around thrust to avoid excessive vertical speed and overshooting the cleared altitude (the missed approach altitude). The third means will cause a drag reduction (among others for improving the climb performance of the aircraft) and finally the fourth means will guide the aircraft through different consecutive stages of the go-around procedure for finally arriving at a situation in which the aircraft levels off at the set missed approach altitude with a manoeuvre speed in a corresponding clean aircraft configuration (which basically is an aircraft configuration with fully retracted high-lift devices and retracted landing gear).

It is noted that the control system in accordance with the present invention generally will be implemented partly in software and partly in hardware and may be of a type having a modular design of which components may be combined with or integrated into aircraft avionics systems. The data which parts of the control system may use for performing their tasks, may be available from standard aircraft components (sensors, gauges, GPS etcetera) or dedicated parts which may be readily conceivable to persons skilled in the art (for example, in the present case, for determining the available thrust or power, the weight of the aircraft, its air speed and altitude, its flight attitude and configuration).

In one embodiment the control system according to the present invention further comprises indication means for indicating to the flight crew the specific phase (or action) of the go-around procedure the aircraft is in at that time (or will be in shortly thereafter). Such indication means preferably will comprise means for giving audible messages, such as spoken text messages. Thus, for example at the beginning of the go-around procedure, once it has been initiated by the flight crew, the control system may call out "GOING AROUND" to confirm that the go-around procedure indeed has been initiated (or will be so immediately thereafter). Examples of other spoken text messages which may be used during other phases of the go-around procedure will be mentioned below (without however limiting these spoken messages to the mentioned specific wordings, which of course may vary, for example to comply with regulations).

It is preferable that the control system is devised for giving the specific indications or audible messages before the actual start of the specific phase or action of the go-around procedure (thus before the actual execution of the mentioned action) in order to timely inform the flight crew and allow the flight crew to timely interfere when needed.

In one embodiment of the control system according to the present invention which is intended for use in an aircraft comprising a datalink communication system, the control system further is devised for downlinking data about the go-around procedure status and flight operational intentions to Air Traffic Control (ATC). This makes sure that the ATC is informed about the go-around procedure automatically and that the flight crew may concentrate on other tasks.

In yet another embodiment the control system which is intended for use in an aircraft comprising a Flight Management System with a navigation mode for lateral aircraft guidance and control in accordance with a programmed flight route in case of a go-around procedure, the control system may further be devised for automatically engaging the said Flight Management System guidance in case of a go-around procedure. As a result the aircraft, once the said engagement has been established, will automatically fly the flight route programmed in the Flight Management System in case of a missed approach. It is noted that it is advised (or even expected) that the flight crew monitors a correct engagement of the Flight Management System for lateral guidance and control.

Further, when the control system is intended for use in an aircraft comprising an autoflight system (with autopilot), the said control system may be devised for, after initiation of the go-around procedure, automatically switching on the autoflight system (which then will take over the main tasks of controlling the aircraft in accordance with the output of the control system).

In one embodiment the second means are devised for aiming at a target speed (of the aircraft) which is controlled by the vertical guidance mode (including auto thrust arrangement) and which is set at a calculated value dependent on the aircraft configuration and available thrust.

In an embodiment of the control system intended for use in an aircraft with high-lift devices, such as flaps and/or slats, the third means may be devised for retracting the high-lift devices one stage for reducing the drag. Such a retraction (or the resulting configuration of the high-lift devices) may be called out by the control system. For example, in case of an Airbus type of aircraft approaching in landing configuration "FLAPS FULL", the callout will be "FLAPS 3 SELECTED" to express that the flaps have been set one position back by the control system.

In one embodiment of the control system according to the present invention and intended for use in an aircraft with a retractable landing gear, the third means may be devised for retracting the landing gear once the aircraft is in a phase of the go-around procedure with a positive rate of climb above a set threshold and during at least a set minimum period of time resulting in a set minimum actual increase of the aircraft altitude.

Once the go-around procedure has been initiated by the flight crew, the pilot flying is expected to rotate the aircraft to achieve a positive rate of climb, and establish the required pitch attitude of the aircraft. The control system will monitor the said rate of climb and the resulting actual increase in aircraft altitude. If the control system observes a positive rate of climb and a minimum actual increase in altitude, it may automatically callout "POSITIVE CLIMB", as required by Standard Operating Procedures (SOP). Then, the observation of such a specific positive rate of climb (for example based upon signals arriving from the previously mentioned sensors, gauges, GPS-data etcetera) will automatically trigger the retraction of the landing gear and thus a reduction of the aircraft drag. The said threshold for the rate of climb may be selected to be 200ft/min and the said set minimum period of time may be 2 seconds while the minimum actual increase of altitude may be 20ft. As a result the retraction of the landing gear before the aircraft actually is climbing, can be avoided. The flight crew generally again will be informed about the retraction of the landing gear by a callout "GEAR UP SELECTED".

Preferably, in one embodiment of the control system according to the present invention the fourth means are devised for at a pre-defined go-around thrust reduction altitude automatically reducing the thrust from the reduced go-around thrust to climb thrust. For example, such a go-around thrust reduction altitude typically may be 1500ft. This relieves the flight crew from altering the thrust setting. Also in this case a specific callout of the control system may be audible in the cockpit.

In case that the control system in accordance with the previous embodiment is used in an aircraft with a so-called "fixed throttle concept" (which basically means that when autothrust is engaged by the autoflight system, the throttle levers are not moving although the thrust settings are changing by automation), the fourth means further may be devised for providing an indication about any discrepancy between the actual throttle lever position and the actual thrust setting. For example, in an Airbus type of aircraft, the indication "LVR CLB" may be flashing on the Flight Mode Annunciator (FMA) display. This will trigger the flight crew to move the thrust lever to the appropriate position, i.e. from TOGA (Take Off Go Around) to CL (Climb) to remove the indication.

In a control system according to the present invention intended for use in an aircraft with high-lift devices, in case the missed approach altitude is set above the so-called go-around acceleration altitude, the fourth means may be devised for during climb at the said go-around acceleration altitude automatically setting a target speed at the missed approach altitude which equals the manoeuvre speed for a clean aircraft configuration with fully retracted high-lift devices and for automatically stepwise retracting the high-lift devices in accordance with the actual aircraft speed while accelerating towards the said target speed.

For example, for an Airbus type of aircraft, this manoeuver speed is the so-called 'green dot' speed. The vertical guidance mode is automatically switched to the "Open Climb" mode (in Airbus phraseology; also sometimes referred to as "Level Change" mode by other parties). This mode combines several aspects: it allows an unrestricted climb to the selected altitude during which auto-thrust commands climb thrust and the speed target are maintained via (flight director) commanded aircraft pitch attitudes via a dedicated pitch-to-speed mode. The aircraft will start to accelerate (during continued climb) towards the manoeuver speed for a clean aircraft configuration (green dot speed). The high lift devices will be automatically retracted at the manoeuvring speeds associated with the actual next aircraft configuration while accelerating. The final goal is to arrive at the set missed approach altitude where the aircraft will level off. The thrust will be automatically adjusted to maintain 'green dot' speed. The vertical guidance mode then will automatically switch to altitude hold mode to maintain the missed approach altitude in a clean aircraft configuration (high-lift devices -and landing gear- fully retracted) where a programmed route may be flown (e.g. as programmed in the Flight Management System (FMS)) towards a next landing attempt.

In a control system according to the present invention intended for use in an aircraft with high-lift devices, in case the missed approach altitude is set at or below the so-called go-around acceleration altitude, the fourth means are devised for at the said missed approach altitude automatically setting a target speed which equals the manoeuvre speed for a clean aircraft configuration with fully retracted high-lift devices and for levelling off the aircraft at the said missed approach altitude while automatically stepwise retracting the high-lift devices in accordance with the actual aircraft speed while accelerating towards the said target speed.

In case of an Airbus type of aircraft as mentioned in accordance with the above example, the target speed is automatically set at the 'green dot' speed. The vertical guidance mode is automatically switched to altitude hold mode to maintain the present missed approach altitude. The aircraft thus will start to accelerate (without further climbing now) towards the green dot speed. The high-lift devices will be automatically retracted at the manoeuvring speeds associated with the actual aircraft configuration while accelerating. Thrust will be automatically adjusted to maintain green dot speed. For an Airbus type of aircraft, this implies that FLAPS 1 is selected above F-speed and accelerating, and FLAPS 0 (clean configuration) is selected above 'S-speed' and accelerating with next speed target at least at the green dot speed. Again the aircraft configuration changes may be announced with audible messages.

Summarizing the control system provides at least the following features:
- Automatic calculation and selection of a reduced go-around thrust to avoid excessive vertical speed and overshooting the cleared altitude (missed approach altitude);
- Automatic downlink of the go-around mode engagement to inform Air Traffic Control:
- Automatic aircraft configuration (flaps/slats and landing gear) changes (and its levers or controls) as required;
- Automatic call out of "POSITIVE CLIMB" when a positive rate of climb and an actual increase of altitude are observed;
- Automatic engagement of Flight Management System guidance mode;
- Automatic selection of climb thrust when passing the go-around thrust reduction altitude;
- Automatic setting target speed at the manoeuver speed for a clean aircraft configuration (green dot speed) and switching to Open Climb (or Level Change) vertical guidance mode when passing the go-around acceleration altitude in case the missed approach altitude is set above the go-around acceleration altitude;
- Audible announcement messages are generated before actual execution of the announced action in order to keep the flight crew informed (e.g. "GOING AROUND", "FLAPS 3 SELECTED", and "GEAR UP SELECTED").

In a second aspect the present invention relates to an aircraft provided with a control system according to the present invention.

It is noted that the flight crew remains responsible for the safe and effective execution of the Go-Around procedure, and therefore will need to monitor the correct execution of the tasks automated by the present invention.

The invention is not limited to the embodiments described before which may be varied widely within the scope of the invention as defined by the appending claims.

## Claims

1. Control system for assisting an aircraft flight crew in performing a go-around procedure after such a go-around procedure has been initiated by the aircraft flight crew, **characterized in that** the control system comprises first means for, after initiation of the go-around procedure, determining the available thrust and weight of the aircraft, second means for, based upon the determined available thrust and weight of the aircraft, calculating and setting a reduced go-around thrust between a pre-defined standard go-around thrust and a lower climb thrust, third means for, after initiation of the go-around procedure, changing the aircraft configuration such that a drag reduction is obtained, and fourth means for, based upon predetermined altitudes of the aircraft, changing the thrust and aircraft configuration for finally arriving at a situation in which the aircraft levels off at a set missed approach altitude with a manoeuvre speed corresponding to a clean aircraft configuration.

2. Control system according to claim 1, further comprising indication means for indicating to the flight crew the specific phase of the go-around procedure the aircraft is in at that time (or will be in shortly thereafter).

3. Control system according to claim 2, wherein the indication means comprise means for giving audible messages, such as spoken text messages.

4. Control system according to claim 2 or 3,
wherein the control system is devised for giving the specific indications or audible messages before the actual start of the specific phase of the go-around procedure.

5. Control system according to any of the previous claims and intended for use in an aircraft comprising a datalink communication system, further devised for downlinking data about the go-around procedure status and flight operational intentions to Air Traffic Control.

6. Control system according to any of the previous claims and intended for use in an aircraft comprising a Flight Management System with a navigation mode for lateral aircraft guidance and control in accordance with a programmed flight route in case of a go-around procedure, further devised for automatically engaging the said Flight Management System guidance in case of a go-around procedure.

7. Control system according to any of the previous claims and intended for use in an aircraft comprising an autoflight system, further devised for, after initiation of the go-around procedure, automatically switching on the autoflight system.

8. Control system according to any of the previous claims, wherein the second means are devised for aiming at a target speed which is controlled by the vertical guidance mode and which is set at a calculated value dependent on the aircraft configuration and available thrust

9. Control system according to any of the previous claims and intended for use in an aircraft with high-lift devices, such as flaps and/or slats, wherein the third means are devised for retracting the high-lift devices one stage.

10. Control system according to any of the previous claims and intended for use in an aircraft with a retractable landing gear, wherein the third means are devised for retracting the landing gear once the aircraft is in a phase of the go-around procedure with a positive rate of climb above a set threshold and during at least a set minimum period of time resulting in a set minimum actual increase of the aircraft altitude.

11. Control system according to claim 10, wherein the said threshold for the rate of climb is 200ft/min and the said set minimum period of time is 2 seconds and the minimum actual increase of the aircraft altitude is 20ft.

12. Control system according to any of the previous claims, wherein the fourth means are devised for at a pre-defined go-around thrust reduction altitude automatically reducing the thrust from the reduced go-around thrust to climb thrust

13. Control system according to claim 12 and intended for use in an aircraft with a so-called "fixed throttle concept", wherein the fourth means further are devised for providing an indication about any discrepancy between an actual throttle lever position and the actual thrust setting.

14. Control system according to any of the previous claims and intended for use in an aircraft with high-lift devices, wherein in case the missed approach altitude is set above the so-called go-around acceleration altitude, the fourth means are devised for during climb at said go-around acceleration altitude automatically setting a target speed at the missed approach altitude which equals the manoeuvre speed for a clean aircraft configuration with fully retracted high-lift devices and for automatically stepwise retracting the high-lift devices in accordance with the actual aircraft speed while accelerating towards the said target speed.

15. Control system according to any of the claims 1-13 and intended for use in an aircraft with high-lift devices, wherein in case the missed approach altitude is set at or below the so-called go-around acceleration altitude, the fourth means are devised for at the said missed approach altitude automatically setting a target speed which equals the manoeuvre speed for a clean aircraft configuration with fully retracted high-lift devices and for levelling off the aircraft at the said missed approach altitude while automatically stepwise retracting the high-lift devices in accordance with the actual aircraft speed while accelerating towards the said target speed.

16. Aircraft provided with a control system according to any of the previous claims.
